Europäisches Patentamt

European Patent Office

Office européen des brevets

(11) Publication number: **0 131 399**
**B1**

(12) **EUROPEAN PATENT SPECIFICATION**

(45) Date of publication of patent specification: **01.04.87**

(21) Application number: **84304098.1**

(22) Date of filing: **18.06.84**

(51) Int. Cl.⁴: **C 03 C 3/087, H 01 J 29/18**

(54) **Glass for cathode ray tube faceplate.**

(30) Priority: **11.07.83 US 512544**
**16.02.84 US 580617**

(43) Date of publication of application:
**16.01.85 Bulletin 85/03**

(45) Publication of the grant of the patent:
**01.04.87 Bulletin 87/14**

(84) Designated Contracting States:
**DE FR NL**

(56) References cited:
**GB-A-1 291 346**
**US-A-4 015 966**
**US-A-4 089 693**
**US-A-4 337 410**

(73) Proprietor: **Corning Glass Works**
**Houghton Park**
**Corning New York 14831 (US)**

(72) Inventor: **Friesen, Glen Delbert**
**184 East Third Street**
**Corning New York 14830 (US)**

(74) Representative: **Smith, Sydney et al**
**Elkington and Fife High Holborn House**
**52/54 High Holborn**
**London WC1V 6SH (GB)**

Courier Press, Leamington Spa, England.

## Description

This invention relates to a glass for a cathode ray tube faceplate.

The faceplate for a cathode ray tube of the type used in television picture tubes is prepared from a transparent glass demonstrating a high degree of X-radiation absorption and excellent resistance to discoloration caused by the bombardment of high velocity electrons thereupon and exposure to X-radiation. The glass must also exhibit a number of physical properties mandated by the process for manufacturing cathode ray tubes. For example:

The faceplate glass must display a coefficient of thermal expansion approximating that of glasses customarily utilized in cathode ray tube manufacture ($\sim$99 $\times$ $10^{-7}$/°C over the temperature range of 25°C—300°C), in order to assure good compatibility with such glasses and to metal components that are sealed therein.

To minimize distortion of the glass components during manufacture of the tube, the glass will most preferably manifest an annealing point not lower than about 500°C and a strain point not lower than about 455°C.

On the other hand, for ease in melting and forming, the glass will evidence a liquidus temperature lower than 900°C and, preferably, no higher than about 880°C, and will exhibit a viscosity at the liquidus of at least 100,000 poises (10,000 Pa.s).

Further, in order to ensure proper operation of the tube, the glass must exhibit an electrical resistivity, expressed in terms of Log, $\rho$, greater than 9 at 250°C and greater than 7 at 350°C.

Where electric melting of the glass is contemplated, easily reducible metal oxides, particularly PbO and $As_2O_3$, will preferably be essentially absent from the composition. It has been conjectured in the glass art that the inclusion of readily reducible metal oxides in a faceplate composition renders the glass susceptible to discoloration resulting from electron browning. Also, volatilization of arsenic creates an air pollution problem.

MgO will desirably be essentially absent from the compositions. Although the mechanism thereof is not fully understood, the presence of MgO appears to render the glass more susceptible to devitrification.

Finally, whereas fluorine has frequently been employed as a flux to assist the melting process because its presence does not substantially affect the electrical resistivity of the glass, its volatilization from the glass batch during melting creates a severe air pollution problem. Furthermore, the inclusion of fluorine exacerbates corrosion of the molds used in forming the faceplates. Consequently, means have been sought to eliminate the fluorine from the batch while compensating for its beneficial fluxing and softening effects on the glass without sacrifice of electrical properties.

### Objective of the invention

Therefore, the principal objective of the instant invention is to provide glass compositions essentially free from $As_2O_3$, MgO, fluorine, and PbO, which exhibit coefficients of thermal expansion between 97—100 $\times$ $10^{-7}$/°C (25°—300°C), annealing points not lower than about 500°C, strain points not lower than about 455°C, liquidus temperatures lower than 900°C, electrical resistivities (Log$\rho$) greater than 9 and greater than 7 at 250°C and 350°C, respectively, and liquidus viscosities of at least 100,000 poises (10,000 Pa.s), which are suitable for use as faceplates for cathode ray tubes, and which are designed for melting in electrically-powered melting units (but which can also be melted in conventional fossil fuel fired melting units;.

### Summary of the invention

That objective can be achieved through glass compositions essentially free from $As_2O_3$, MgO, PbO, and F consisting essentially, expressed in terms of weight percent on the oxide basis, of

| | | | |
|---|---|---|---|
| $SiO_2$ | 60—63 | $Li_2O$ | 0.25—0.75 |
| $Al_2O_3$ | 1.5—3 | CaO | 1.5—3.0 |
| BaO | 5—9 | $ZrO_2$ | 1.5—3 |
| SrO | 8—10 | $TiO_2$ | 0.25—0.75 |
| $Na_2O$ | 7.25—9.5 | $CeO_2$ | 0.15—0.5 |
| $K_2O$ | 6—8 | | |

Colorants conventionally utilized in television picture tube faceplates glasses, e.g., $Co_3O_4$, $Cr_2O_3$, and NiO, may also be included, if desired, in customary amounts. Such levels normally range up to about 20 ppm (parts/million) $Co_3O_4$, up to 20 ppm $Cr_2O_3$, and up to 250 ppm NiO.

Although relatively readily reducible, $Sb_2O_3$ may be tolerated in amounts up to 0.5% to perform as a fining agent. Hence, where a fining agent is deemed necessary, $Sb_2O_3$ may be employed instead of $As_2O_3$ since it is not as easily reduces as $As_2O_3$. Even where electric melting of the glass is not contemplated such that reduction thereof is not as serious a problem, the absence of $As_2O_3$ is preferred and no more than about 0.25% can be tolerated.

The above ranges of components must be rigorously observed to ensure the production of glasses suitable for use as cathode ray tube faceplates and exhibiting the desired physical properties. Thus, $TiO_2$ and $CeO_2$ provide protection against discoloration resulting from exposure to X-radiation. BaO, SrO, and

ZrO$_2$ act to absorb X-radiation. And the levels of these components and the ranges of the other glass constituents must be carefully balanced to yield glasses exhibiting the required viscosity characteristics for melting and forming, along with the desired thermal expansion and liquidus value. To illustrate, an increase in the Na$_2$O or K$_2$O content lowers the visosity of the glass at its liquidus. Li$_2$O has a powerful effect in softening the glass, while increasing the electrical resistivity of the glass and permits the elimination of fluorine as a fluxing agent in the glass. Nevertheless, because of this string fluxing action, the Li$_2$O content must be carefully controlled. Al$_2$O$_3$ imparts good chemical durability thereto but has the unwanted side effect of hardening the glass. CaO tends to soften the glass and increase its electrical resistivity, but has the undesirable effect of increasing the liquidus temperature. Higher levels of SrO, BaO, and ZrO$_2$ reduce the liquidus viscosity of the glass.

In summary, then, the several components of the inventive glasses will be manipulated within the delineated straitly-defined regimes in order to ensure the demanded viscosity characteristics, liquidus values, and physical properties.

U.S. Patents 3,464, 932; 3,805,107; 3,925,089; 3,987,330; 4,015,966; 4,065,697; 4,089,693; 4,331,770; 4,337,410; and Japanese application No. 53—113813 (1978) are considered to be representative of the state of the art; none of these teach or suggest this invention.

Description of the preferred embodiments

Table I recites a number of glass compositions, expressed in terms of parts by weight on the oxide basic, illustrating the parameters of the invention. Inasmuch as the sum of the individual components closely approximates 100, for all practical purposes the tabulated values may be deemed to represent weight percent. The actual batch ingredients may comprise any materials, either the oxides or other compounds, which when melted together, will be converted into the desired oxides in the proper proportions. Because it is not known with which cation(s) the fluorine is combined, it is merely reported in terms of fluoride ion, in accordance with conventional glass analysis practice.

The batch constituents were compounded, tumble mixed together to aid in obtaining a homogeneous melt, and then charged into platinum crucibles. Lids were placed upon the crucibles and the crucibles were introduced into a furnace operating at 1550°C. After melting for six hours, the molten batches were poured into steel molds to form glass slabs having dimensions of 6″ × 6″ × 0.5″, (15.24 × 15.24 × 1.27 cm), and those slabs transferred immediately to an annealer operating at 500°C. Samples were thereafter cut from the slabs to be used for the determination of various physical properties.

TABLE I

| | 1 | 2 | 3 | 4 | 5 | 6 | 7 | 8 |
|---|---|---|---|---|---|---|---|---|
| $SiO_2$ | 61.4 | 61.08 | 62.5 | 62.6 | 62.7 | 61.56 | 60.58 | 61.33 |
| $Al_2O_3$ | 2.0 | 2.00 | 2.0 | 2.0 | 2.0 | 2.0 | 2.00 | 1.99 |
| BaO | 5.7 | 5.7 | 5.7 | 3.7 | 1.7 | 5.49 | 7.90 | 5.69 |
| SrO | 9.7 | 9.7 | 9.7 | 9.7 | 9.7 | 9.63 | 9.20 | 9.7 |
| $Na_2O$ | 8.1 | 10.25 | 8.6 | 8.6 | 8.6 | 8.07 | 7.55 | 8.26 |
| $K_2O$ | 7.1 | 5.5 | 6.6 | 8.0 | 9.4 | 7.01 | 7.1 | 7.09 |
| $Li_2O$ | — | 0.1 | — | — | — | 0.52 | 0.5 | 0.5 |
| CaO | 1.8 | 1.8 | 1.8 | 1.8 | 1.8 | 1.8 | 1.8 | 1.8 |
| MgO | — | 0.02* | — | — | — | — | 0.02* | 0.02* |
| $ZrO_2$ | 2.5 | 2.50 | 2.5 | 3.5 | 4.5 | 2.49 | 2.00 | 2.5 |
| $TiO_2$ | 0.4 | 0.50 | 0.4 | 0.4 | 0.4 | 0.5 | 0.50 | 0.5 |
| $CeO_2$ | 0.2 | 0.3 | 0.2 | 0.2 | 0.2 | 0.34 | 0.30 | 0.3 |
| $Sb_2O_3$ | — | 0.35 | — | — | — | 0.38 | 0.35 | 0.35 |
| F | 0.7 | — | — | — | — | — | — | — |
| $Co_3O_4$ | — | 0.0005 | — | — | — | — | 0.0005 | 0.0005 |
| NiO | — | 0.0004 | — | — | — | — | 0.0004 | 0.0004 |
| $As_2O_3$ | — | 0.2 | — | — | — | 0.21 | 0.2 | — |

* Impurity in batch material; not intentionally added.

Table II sets forth measurements of various physical properties conducted on samples of Examples 1—8. Thus, values of the softening point (Soft.), the annealing point(Ann.), and the strain point (Str.), all in °C, the coefficient of thermal expansion between 25°—300°C (Exp.) in terms of $\times 10^{-7}/°C$, the internal liquidus temperature in °C (Liq.) determined employing a platinum boat in a temperature gradient furnace, the electrical resistivity, expressed in terms of Log $\rho$, measured at 250°C and 350°C and the viscosity of the glass (Vis.) at the liquidus temperature in terms of poises, as derived from a standard curve generated by the glass, are included.

0 131 399

TABLE II

| | 1 | 2 | 3 | 4 | 5 | 6 | 7 | 8 |
|---|---|---|---|---|---|---|---|---|
| Soft. | 708 | 698 | 720 | 722 | 731 | 691 | 694 | 689 |
| Ann. | 520 | 518 | 525 | 533 | 539 | 507 | 508 | 502 |
| Str. | 480 | 476 | 499 | 491 | 495 | 473 | 467 | 460 |
| Exp. | 94.6 | 100.4 | 95.4 | 97.1 | 96.0 | 98.5 | 98.3 | 98.0 |
| Liq. | 858 | 795 | 883 | 903 | 963 | 878 | 812 | 877 |
| Log ρ 250 | — | 8.461 | — | — | — | — | 9.70 | 9.14 |
| Log ρ 350 | — | 6.675 | — | — | — | — | 7.73 | 7.23 |
| Vis. | — | — | — | — | — | $12 \times 10^4$ | — | $12 \times 10^4$ |
| | | | | | | $(1,2 \times 10^4$ Pa.s) | | $(1,2 \times 10^4$ Pa.s) |

$As_2O_3$-free Example 8 represents the most preferred embodiment of the invention. Examples 1—5 clearly illustrate that minor variations in composition outside of the specified ranges yield glasses exhibiting properties and behaviour outside of those desired.

**Claims**

1. A glass essentially free from, MgO, fluorine, and PbO suitable for manufacturing fireplaces for cathode ray tubes which exhibit a coefficient of thermal expansion (25°—300°C) between 97—100 $\times$ $10^7$/°C, an annealing point not lower than about 500°C, a strain point not lower than about 455°C, an internal liquidus temperature lower than 900°C, an electrical resistivity expressed in Log ρ at 250°C greater than 9 and Log ρ at 350°C greater than 7, and a liquidus visosity of at least 100,000 poises (10000 Pa.s), said glass consisting essentially, expressed in terms of weight percent on the oxide basis, of

| | | | |
|---|---|---|---|
| $SiO_2$ | 60—63 | $Li_2O$ | 0.25—0.75 |
| $Al_2O_3$ | 1.5—3 | CaO | 1.5—2.5 |
| BaO | 5—9 | $ZrO_2$ | 1.5—3 |
| SrO | 8—10 | $TiO_2$ | 0.25—0.75 |
| $Na_2O$ | 7.25—9.5 | $CeO_2$ | 0.15—0.5 |
| $K_2O$ | 6—8 | $Sb_2O_3$ | 0—0.5 |
| | | $As_2O_3$ | 0—0.25 |

2. A glass according to claim 1 also containing up to 20 ppm (parts per million) $Co_3O_4$ and/or up to 20 ppm $Cr_2O_3$ and/or up to 250 ppm NiO.

3. A process for the preparation of a glass as claimed in claim 1 or claim 2 characterised in that one melts together oxides or materials convertible thereto on melting in those proportions which will give a glass as claimed in claim 1 or claim 2.

4. A cathode ray faceplate tube characterised in that it consists of a glass as claimed in claim 1 or claim 2 or a glass made as in claim 3.

**Patentansprüche**

1. Glas, dem im wesentlichen frei von MgO, Fluor und PbO und geeignet ist für die Herstellung von Schirmen für Kathoden-strahlöhren, das einen Warmeausdehnungskoeffizienten (25°—300°C) zwishchen 97—100 $\times$ $10^{-7}$/°C, einen oberen Kühlpunkt von nicht niedriger als ca. 500°C, eine untere Kühltemperatur von nicht niedriger als ca. 455°C, eine interne Liquidustemperatur von unter 900°C, einen elektrischen spezifischen Widerstand, ausgedrückt in Log ρ bei 250°C von größer als 9 und bei 350°C von größer als 7 und eine Liquidus-Viskosität von wenigstens 100 000 Poise (10 000 Pa.s) aufweist und im wesentlichen, ausgedrückt in Gew.% auf Oxid-Basis, besteht aus

5

| SiO₂ | 60—63 | Li₂O | 0,25—0,75 |
|------|-------|------|-----------|
| Al₂O₃ | 1,5—3 | CaO | 1,5—2,5 |
| BaO | 5—9 | ZrO₂ | 1,5—3 |
| SrO | 8—10 | TiO₂ | 0,25—0,75 |
| Na₂O | 7,25—9,5 | CeO₂ | 0,15—0,5 |
| K₂O | 6—8 | Sb₂O₃ | 0—0,5 |
| | | As₂O₃ | 0—0,25 |

2. Glas nach Anspruch 1, auch enthaldend bis zu 20 ppm (Teile pro Million) $Co_3O_4$ und/oder bis zu 20 ppm $Cr_2O_4$ und/oder bis zu 250 ppm NiO.

3. Verfahren zur Herstellung des Glases nach Anspruch 1 oder 2 dadurch gekennzeichnet, daß man Oxide oder Materialien, die sich zu diesen umwandeln, in solchen Proportionen zusammenschmiltz, daß man eine Glas erhält, wie es in Anspruch 1 oder 2 beansprucht ist.

4. Kathodenstrahlröhren-Schirm, dadurch gekennzeichnet, daß er aus einem Glas besteht, wie es in den Ansprüchen 1 oder 2 beansprucht ist oder einem Glas, das gemäß Anspruch 3 hergestellt wird.

**Revendications**

1. Un verre essentiellement exempt de MgO, de fluor et de PbO se prêtant à la fabrication de panneaux frontaux pour tubes cathodiques qui présente un coefficient de dilatation thermique (25—300°C) compris entre 97 et 100 $\times 10^{-7}/°C$, un point de recuit non inférieur à environ 500°C, un point de contrainte non inférieur à environ 455°C, une température de liquidus interne inférieure à 900°C, une résistivité électrique ρ dont le lagarithme est supérieur à 9 à 250°C et supérieur à 7 à 350°C, et une viscosité au liquidus d'au moins 100 000 poises (10 000 Pa.s), ledit verre étant essentiellement constitué, en pourcentages pondéraux sur la base des oxydes, de

| SiO₂ | 60 à 63 | Li₂O | 0,25 à 0,75 |
|------|---------|------|-------------|
| Al₂O₃ | 1,5 à 3 | CaO | 1,5 à —2,5 |
| BaO | 5 à 9 | ZrO₂ | 1,5 à 3 |
| SrO | 8 à 10 | TiO₂ | 0,25 à 0,75 |
| Na₂O | 7,25 à 9,5 | CeO₂ | 0,15 à 0,5 |
| K₂O | 6 à 8 | Sb₂O₃ | 0 à 0,25 |
| | | As₂O₃ | 0 à 0,25 |

2. Un verre selon la revendication 1, contenant aussi jusqu'à 20 ppm (parties par million) de $CO_3O_4$ et/ou jusqu'à 20 ppm de $Cr_2O_3$ et/ou jusqu'à 250 ppm de NiO.

3. Procédé pour la préparation d'un verre selon la revendication 1 ou la revendication 2, caractérisé en ce que l'on fond ensemble des oxydes ou matières convertibles en oxydes lors de la fusion dans les proportions propres à fournir un verre selon la revendication 1 ou la revendication 2.

4. Panneau frontal de tube cathodique, caractérisé en ce qu'il est constitué d'un verre selon la revendication 1 ou la revendication 2 ou d'un verre préparé par le procédé selon la revendication 3.